# EUROPÄISCHE PATENTANMELDUNG

(11) **EP 3 495 125 A1**
(43) Veröffentlichungstag der Anmeldung: **12.06.2019**
(21) Anmeldenummer: 18194976.9
(22) Anmeldetag: 18.09.2018
(51) Int. Cl.: B29C 73/16, B60C 19/12

(54) **SELBSTTÄTIG ABDICHTENDES REIFENDICHTMITTEL UND FAHRZEUGLUFTREIFEN ENTHALTEND DAS REIFENDICHTMITTEL**

(30) Priorität: 06.12.2017 DE 102017222075
(71) Anmelder: Continental Reifen Deutschland GmbH, 30165 Hannover (DE)
(72) Erfinder: Tim Kee, Sherry-Ann, 30167 Hannover (DE); Doroshenko, Mikheil, 30823 Garbsen (DE); Cai, Xiaoke, 30165 Hannover (DE); Guardalabene, Joe, 30659 Hannover (DE)
(74) Vertreter: Finger, Karsten

(57) **Zusammenfassung**

Die Erfindung betrifft ein selbsttätig abdichtendes Reifendichtmittel und einen Fahrzeugluftreifen enthaltend das Reifendichtmittel.

Das erfindungsgemäße Dichtmittel enthält sphärische magnetische Partikel.

Der erfindungsgemäße Fahrzeugluftreifen weist das erfindungsgemäße Dichtmittel wenigstens auf der dem Laufstreifen gegenüberliegenden Innenfläche auf.

## Beschreibung

Die Erfindung betrifft ein selbsttätig abdichtendes Reifendichtmittel und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.
Das Dichtmittel zeichnet sich durch Luftdichtigkeit, starke Klebrigkeit und ausgewogenes Fließverhalten aus.

In der WO 2008/141848 A1 ist ein Verfahren zur Herstellung eines Reifendichtmittels offenbart, wobei dieses aus zwei Dichtmittelkomponenten A und B hergestellt wird.

In der DE 102007028932 A1 ist ein Fahrzeugluftreifen offenbart, dessen Dichtmittel auf Basis einer viskosen Mischung auf Basis eines Butylkautschukes und eines Polybutens ausgeführt sein kann.

Bei der Zusammensetzung des Dichtmittels ist jedoch zu beachten, dass es einerseits ein gutes Fließverhalten aufweisen muss, um insbesondere schnell zur Einstichstelle zu gelangen und diese auszufüllen, aber andererseits eine ausreichende Ortsfestigkeit aufweisen muss, damit es nach dem (zufälligen) Entfernen des Einstichobjektes nicht aus der Einstichstelle herausfließt.
Für den ersten Mechanismus ist eine vergleichsweise niedrige Viskosität von Vorteil, während diese für das Herausfließen eher von Nachteil ist.

Der vorliegenden Erfindung liegt daher die Aufgabe zugrunde, ein selbsttätig abdichtendes Reifendichtmittel bereitzustellen, welches hinsichtlich des Zielkonfliktes aus Fließverhalten, insbesondere um unmittelbar eine Einstichstelle zu schließen, und Ortsfestigkeit, insbesondere um nach Entfernen des Objektes nicht aus der Öffnung heraus zu fließen, optimiert ist.

Gelöst wird diese Aufgabe dadurch, dass das Dichtmittel sphärische magnetische Partikel enthält.
Dadurch, dass das Dichtmittel sphärische Partikel enthält, wird das Fließverhalten optimiert, wobei das Dichtmittel insbesondere homogen in alle Raumrichtungen fließen kann. Eine Einstichstelle wird somit optimal vom Dichtmittel ausgefüllt. Nach dem Entfernen des Einstichobjektes verbleibt das Dichtmittel aufgrund der magnetischen Anziehungskräfte der Partikel untereinander in der Einstichstelle, seine Viskosität hat sich hierdurch erhöht, bzw. das rheologische Verhalten verändert. Das erfindungsgemäße Dichtmittel ermöglicht somit eine längere Fahrdauer eines Fahrzeugluftreifens im Pannenfall und damit mehr Sicherheit und Komfort im Fahrbetrieb.

Es ist gemäß einer bevorzugten Ausführungsform der Erfindung vorteilhaft, wenn die Partikel zuvor, also vor Verwendung des Dichtmittels insbesondere in Fahrzeugluftreifen, magnetisch aktiviert sind.
Die magnetischen Partikel werden dabei insbesondere von Nägeln als Einstichobjekte angezogen.

Durch die Verwendung von magnetischen Partikeln kann gleichzeitig die Menge an Klebrigmachern, die üblicherweise in einem Dichtmittel enthalten sind, reduziert werden. Hierdurch werden Schwierigkeiten bei der Herstellung und Lagerung von Reifen mit dem Dichtmittel vermieden.

Gleichzeitig weist das Dichtmittel mit sphärischen magnetischen Partikeln im Vergleich zu nicht sphärischen Partikeln eine optimale Verteilung der magnetischen Partikel und damit der magnetischen Kräfte und ein optimiertes Gewicht auf, sodass der Reifen mit dem Dichtmittel ein vergleichsweise geringes Gewicht und damit einen optimierten Rollwiderstand aufweist.

Bevorzugt enthält das Dichtmittel 0,2 bis 10 Gew.-% der sphärischen magnetischen Partikel. Hierbei ist auch ein Gemisch verschiedener sphärischen magnetischen Partikel denkbar, wobei die Gesamtmenge bevorzugt 0,2 bis 10 Gew.-% beträgt.

Bevorzugt weisen die sphärischen magnetischen Partikel einen Durchmesser von 0,01 bis 40 µm (Mikrometer) auf, besonders bevorzugt 0,1 bis 40 µm (Mikrometer), ganz besonders bevorzugt 0,2 bis 10 µm, wiederum bevorzugt 0,2 bis 5 µm (Mikrometer).
Insbesondere mit einem Durchmesser der sphärischen magnetischen Partikel von 0,1 µm, bevorzugt 0,2 µm (Mikrometer) oder mehr wird ein optimales Fließverhalten erzielt und Prozessschwierigkeiten aufgrund zu feiner Partikel vermieden.
Partikel mit einem Durchmesser von mehr als 40 µm führt wiederum zu einem schlechteren Fließverhalten und einer unerwünscht hohen Viskosität.

Partikelgröße der sphärischen magnetischen Partikel wird mittels SEM ("scanning electron microscopy") bestimmt.
Hierbei ist unter Partikelgröße der größtmögliche Abstand in der zweidimensionalen Projektion eines Partikels zu verstehen. Da die Partikel sphärisch geformt sind, entspricht dies dem Durchmesser.

Prinzipiell sind alle magnetischen Materialien für die sphärischen magnetischen Partikel denkbar.
Gemäß vorteilhafter Ausführungsformen enthalten die sphärischen magnetischen Partikel Eisen und/oder Eisenverbindungen, insbesondere Eisenoxide, wie beispielsweise Magnetit.

Gemäß vorteilhafter Ausführungsformen tragen die sphärischen magnetischen Partikel funktionelle Gruppen, wie insbesondere Silanolgruppen und/oder Carboxy-Gruppen. Dies bedeutet, dass zumindest die Oberfläche dieser Partikel mit den genannten Gruppen modifiziert ist.
Durch funktionelle Gruppen an der Oberfläche der Partikel wird eine bessere Mischbarkeit im Dichtmittel erzielt.

Gemäß vorteilhafter Ausführungsformen sind die sphärischen magnetischen Partikel mit einer Schicht überzogen, die insbesondere Polystyrol und/oder Polymethylmethacrylat umfasst.

Gemäß einer besonders vorteilhaften Ausführungsform der Erfindung enthält das selbsttätig abdichtende Reifendichtmittel 50 bis 75 Gew.-% wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.
Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.
Hierbei ist es besonders bevorzugt, dass das wenigstens eine Polyolefin wenigstens ein Polybuten ist.
Dieses stellt die Klebrigkeit des fertigen Dichtmittels ein und bestimmt die Fließfähigkeit im Produktionsprozess sowie die lokale Ortsfestigkeit des fertigen Dichtmittels.
Es kann sich auch um ein Gemisch zweier oder mehrerer Polybutene mit jeweils einem Mn von 400 bis 2500 g/mol handeln, wobei sich die Polybutene im Mn unterscheiden können.
Geeignete Polybutene, auch Polyisobutene genannt, sind beispielsweise unter den Handelsnamen Indopol® Polybutene der Firma INEOS Capital Limited erhältlich. Es ist auch ein Gemisch wenigstens eines Polybutens mit wenigstens einem weiteren Polyolefin denkbar. Die Gesamtmenge an enthaltenen Polyolefinen beträgt in jedem Fall wie oben ausgeführt 50 bis 75 Gew.-%.

Bevorzugt enthält das Reifendichtmittel zudem wenigstens einen Kautschuk.

Die Menge des wenigstens einen Kautschuks beträgt bevorzugt 9 bis 15 Gew.-% bezogen auf die Gesamtmenge an Dichtmittel.

Bei dem Kautschuk kann es sich um alle dem Fachmann bekannten Kautschuktypen handeln. Es ist auch ein Gemisch verschiedener Kautschuke denkbar.
Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Bevorzugt enthält das Dichtmittel zudem wenigstens einen Klebrigmacher.

Bevorzugt beträgt die Menge des wenigstens einen Klebrigmachers 2 bis 3,5 Gew.-%. Wie oben erläutert kann mit der erfindungsgemäßen Zusammensetzung des Dichtmittels im Vergleich zum Stand der Technik eine geringere Menge an Klebrigmachern eingesetzt werden.
Gleichzeitig wird ein optimiertes Fließverhalten bei gleichzeitig guter Klebrigkeit erzielt.

Unter Klebrigmacher wird im Rahmen der vorliegenden Erfindung eine Substanz verstanden, die die Klebrigkeit des Dichtmittels erhöht. Bevorzugt ist der Klebrigmacher wenigstens ein Kohlenwasserstoffharz (kurz Harz), welches ausgewählt ist aus der Gruppe bestehend aus Petroleumharzen, Kohlenteerharzen, Terpenharzen und natürlichen Harzen.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.
Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".
Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.
Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.
Gemäß einer bevorzugten Ausführungsform der Erfindung weist der wenigstens eine Klebrigmacher kein phenolisches Kohlenwasserstoffharz auf, bzw. basiert der Klebrigmacher bevorzugt nicht auf Phenol als Monomer.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw.

Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.
Bei den Alkenen kann es sich beispielsweise um 1-Buten und/oder 2-Buten und/oder Butadien handeln.

Gemäß einer bevorzugten Ausführungsform der Erfindung handelt es sich bei dem Klebrigmacher um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.
Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Klebrigmacher um wenigstens ein Harz, welches wenigstens aus C₅-Monomeren aufgebaut ist und dem Fachmann als sogenanntes Cs-Harz bekannt ist. Hiermit werden besonders gute Eigenschaften des Dichtmittels, insbesondere ein optimiertes Fließverhalten bei gleichzeitig guter Klebrigkeit, erzielt. Die Vorteile zeigen sich insbesondere im Vergleich zu Phenolharzen (phenolischen Harzen) als Klebrigmacher.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.
Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.
Bevorzugt enthält das Dichtmittel zudem wenigstens einen Füllstoff.

Die Menge des wenigstens einen Füllstoffs beträgt bevorzugt 5 bis 14 Gew.-%, besonders bevorzugt 7 bis 9 Gew.-%, bezogen auf die Gesamtmenge an Dichtmittel. Bei dem Füllstoff kann es sich um alle dem Fachmann bekannten Füllstoffe handeln, wie insbesondere Ruß und/oder Kieselsäure.
Gemäß einer bevorzugten Ausführungsform der Erfindung umfasst der Füllstoff in wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.
Hierbei kann es sich um alle dem Fachmann bekannten Rußtypen handeln, wie insbesondere und bevorzugt ein Ruß des Typs N326.

Bevorzugt basiert das Dichtmittel auf der Vernetzung eines Kautschuks mit einem Vernetzer.
Dem Fachmann ist klar, dass die genannten Bestandteile im vernetzten Dichtmittel zumindest teilweise in chemisch veränderter Form, insbesondere als Derivate, vorliegen.

Bevorzugt enthält das Reifendichtmittel somit wenigstens einen Vernetzer.
Die Menge des wenigstens einen Vernetzers beträgt bevorzugt 0,4 bis 1,2 Gew.-%, besonders bevorzugt 0,4 bis 0,8 Gew.-%, bezogen auf die Gesamtmenge an Dichtmittel.

Gemäß einer bevorzugten Ausführungsform der Erfindung ist der Vernetzer ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.
Mit den bevorzugten und besonders bevorzugten Vernetzern wird eine extrem schnelle Vernetzung bei relativ niedrigen Temperaturen erzielt. Dies ermöglicht bei der Herstellung des Dichtmittels eine Anwendung von Rezepten mit niedrigen Viskositäten die schnell nach dem Aufbringen des Materials in den Reifen ortsfest sind.

Insbesondere durch die Kombination eines Vernetzers mit einem Vernetzungsinitiator wird ein besonders wirksames, im Pannenfall schnell abdichtendes Reifendichtmittel erhalten.

Gemäß einer besonders vorteilhaften Ausführungsform der Erfindung enthält das Reifendichtmittel wenigstens einen Vernetzungsinitiator, bevorzugt ausgewählt aus der Gruppe enthaltend Bleioxid und andere Metalloxide und peroxidische Verbindungen.
Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Die Menge des wenigstens einen Vernetzungsinitiators beträgt bevorzugt 0,5 bis 1,6 Gew.-%, besonders bevorzugt 0,5 bis 1,2 Gew.-%, bezogen auf die Gesamtmenge an Dichtmittel.

Das Dichtmittel kann ferner weitere Bestandteile enthalten, wie insbesondere Weichmacher, wie z. B. Öl(e), sowie gegebenenfalls weitere Zusatzstoffe, wie z. B. Farbpigmente und/oder Zinkoxid und/oder Schwefel und/oder nicht magnetische Mikrosphären und/oder Glaskugeln und/oder Plastikpartikel.

Gemäß vorteilhafter Ausführungsformen der Erfindung enthält das Dichtmittel folgende Bestandteile in folgenden Mengen:
- 0,2 bis 10 Gew.-% der sphärischen magnetischen Partikel
- 50 bis 75 Gew.-% wenigstes eines Polyolefins, bevorzugt wenigstens eines Polybutens, und
- 2,0 bis 3,5 Gew.-% wenigstens eines Klebrigmachers und
- 9,0 bis 15 Gew.-% wenigstens eines Kautschuks und
- 5,0 bis 9 Gew.-% wenigstens eines Füllstoffs und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Das erfindungsgemäße Reifendichtmittel kann durch im Stand der Technik bekannte Verfahren hergestellt werden, wobei die magnetischen Partikel in einer möglichen Vorstufe des Dichtmittels eingemischt werden.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

Die magnetischen Partikel können bei der Herstellung des Dichtmittels beispielsweise wie andere Füllstoffe eingemischt werden. Es ist auch denkbar, dass die magnetischen Partikel vor dem Aufbringen der Dichtmittellage auf die Reifeninnenseite oder nachträglich gleichmäßig auf die Dichtmittellage im Reifen aufgebracht werden.
Das Aufbringen der magnetischen Partikel kann beispielsweise mittels geeigneter Sprühvorrichtungen, wie insbesondere einer Sprühpistole, erfolgen.

Geeignete magnetische Partikel sind beispielsweise unter den folgenden Handelsnamen erhältlich: ProMag® oder ProMag® HP High Performance Magnetic Microspheres der Firma Polysciences, Inc.; Estapor® SuperParamagnetic Microspheres der Firma Merck KGaA; MagniF der Firma LKAB Minerals oder Eisenoxid-Partikel der Firma micromod Partikeltechnologie GmbH.
Mit Silanolgruppen modifizierte magnetische Partikel sind beispielsweise unter dem Handelsnamen SiMAG-Silanol der Firma chemicell GmbH erhältlich.
Mit Carboxy-Gruppen modifizierte magnetische Partikel sind beispielsweise unter dem Handelsnamen SiMAG-Carboxyl der Firma chemicell GmbH erhältlich.

## Patentansprüche

1. Selbsttätig abdichtendes Reifendichtmittel, **dadurch gekennzeichnet, dass** es sphärische magnetische Partikel enthält.

2. Reifendichtmittel nach Anspruch 1, **dadurch gekennzeichnet, dass** es 0,2 bis 10 Gew.-% der sphärischen magnetischen Partikel enthält.

3. Reifendichtmittel nach Anspruch 1 oder 2, **dadurch gekennzeichnet, dass** die sphärischen magnetischen Partikel einen Durchmesser von 0,01 bis 40 µm (Mikrometer), besonders bevorzugt 0,1 bis 40 µm, ganz besonders bevorzugt 0,2 bis 10 µm aufweisen.

4. Reifendichtmittel nach einem der vorherigen Ansprüche, **dadurch gekennzeichnet, dass** die sphärischen magnetischen Partikel Eisen und/oder Eisenverbindungen, insbesondere Eisenoxide, enthalten.

5. Reifendichtmittel nach einem der vorherigen Ansprüche, **dadurch gekennzeichnet, dass** die sphärischen magnetischen Partikel funktionelle Gruppen tragen, wie insbesondere Silanolgruppen und/oder Carboxy-Gruppen.

6. Reifendichtmittel nach einem der vorherigen Ansprüche, **dadurch gekennzeichnet, dass** die sphärischen magnetischen Partikel magnetisch aktiviert sind.

7. Reifendichtmittel nach einem der vorherigen Ansprüche, **dadurch gekennzeichnet, dass** es wenigstens ein Polyolefin, bevorzugt mit einem Zahlenmittel der Molekulargewichtsverteilung Mn gemäß GPC von 400 bis 2500 g/mol, enthält.

8. Reifendichtmittel nach Anspruch 7, **dadurch gekennzeichnet, dass** es 50 bis 75 Gew.-% des wenigstens einen Polyolefins enthält.

9. Fahrzeugluftreifen, der das Reifendichtmittel nach einem der Ansprüche 1 bis 8 wenigstens auf der dem Laufstreifen gegenüberliegenden Innenfläche aufweist.
